# EUROPEAN PATENT SPECIFICATION

(11) **EP 3 293 210 B1**
(45) Date of publication and mention of the grant of the patent: **06.03.2019**
(21) Application number: 16188335.0
(22) Date of filing: 12.09.2016
(51) Int. Cl.: C08F 2/00, B01J 19/00, C08F 2/01, C08F 2/12, C08F 2/18, C08J 5/18, C08L 23/04, C08L 23/06

(54) **MULTIMODAL POLYETHYLENE FILM**
MULTIMODALER POLYETHYLENFILM
FILM POLYÉTHYLÈNE MULTIMODAL

(43) Date of publication of application: 14.03.2018
(73) Proprietor: Thai Polyethylene Co., Ltd., 10800 Bangkok (TH); SCG Chemicals Co., Ltd., Bangkok 10800 (TH)
(72) Inventor: Arunsri, Mattayan, 10800 Bangkok (TH); Watcharee, Cheevasrirungruang, 10800 Bangkok (TH); Saranya, Traisilanun, 10800 Bangkok (TH); Warachad, Klomkamol, 10800 Bangkok (TH)
(74) Representative: Scholz, Volker

(56) References cited:
- WO-A1-2008/049551
- US-B1- 6 713 561

## Description

The present invention relates to a multimodal polyethylene composition using a specific process and a reactor system, a film comprising said multimodal polyethylene composition and use thereof.

The demand of polyethylene resins is increasingly being used in a variety of applications. As required high performance of polyethylene for a relatively new plastic, a polymerization process technology has been developed to support new polymeric material production. In order for balancing processability and physical properties of ethylene copolymers, the development in multimodal polymerization process has been investigated.

In the prior art, multimodal polyethylene polymerization is employed to produce polymers having different molecular weights by creating each resin fraction in separated reactors. A low molecular weight fraction is produced in a reactor using an excess of hydrogen to control the molecular weight of the polymer suitable for providing good processability of the final polymer. A high molecular weight fraction which has an influence on the physical properties and is produced under polymerization conditions with low hydrogen concentration. It is well known in the art that low molecular weight polymer is preferably produced in a first reactor. To obtain a multimodal polymer with good physical properties, all hydrogen from the first reactor should be removed before the polymerized slurry polymer is passed to a second reactor in which the production of high molecular weight polymer takes place.

US2010/0092709 A1 describes a process for preparing bimodal polyethylene copolymers. The polymerization in a second reactor is operated at a high temperature with a low comonomer-to-ethylene-ratio and low hydrogen-to-ethylene-ratio to obtain resins having improved stress crack resistance and melt strength.

US 6,716,936 B1 describes a process for producing bimodal polyethylene copolymers. A second reactor is operated under hydrogen depleted polyethylene polymerization by directing a polyethylene slurry stream from a first reactor to a hydrogen removal system. Polymerization in both the first and the second reactors is operated at the bubble point by using propane or isobutane as a light solvent. The process is suitable for the production of a bimodal polyethylene for highly homogeneous high molecular weight resins.

US 6,291,601 B1 describes a process for producing a bimodal copolymer with relatively high molecular weight polyethylene. A hydrogenation catalyst is introduced into a second reactor to consume residual hydrogen gas from first reactor by converting hydrogen into ethane leading to a low hydrogen concentration in the second reactor. Using this technique, the cost of raw material consumption of both hydrogen and ethylene are increased due to converting of unreacted gases.

US 2003/0191251 A1 discloses a process for removing residual hydrogen from a polymer slurry by using two flash drums placed between cascade reactors which use light solvent as a diluent. The addition of make-up solvent to the first flash drum outlet is required to prevent a slurry transfer pump blocking. Furthermore, warm make-up solvent is necessary before transferring slurry into the next flash drum.

EP 1 655 334 A1 discloses the multimodal production of an ethylene polymer which is produced in a multistage process with a MgCl₂-based Ziegler-Natta catalyst. The polymerization stages are performed in the following order to achieve firstly a ultra high molecular weight polymer, followed by achieving a low molecular weight polymer, and finally achieving high molecular weight polymer in the last step. The polymerization catalyst is charged to a prepolymerization step to make an ultrahigh molecular weight fraction.

WO 2013/144328 describes a composition of multimodal high density polyethylene which is produced using a Ziegler-Natta catalyst for use in molding applications. A small fraction of ultrahigh polyethylene of less than 15 % by weight is produced in a third reactor.

US 2009/0105422 A1 describes a process for producing a multimodal polyethylene. The polymerization is carried out in three cascade reactors, wherein the molecular weight of the polymer in each reactor is controlled by the presence of hydrogen. The concentration of the hydrogen in each reactor is reduced subsequently by providing the highest hydrogen concentration in the first reactor and the lowest hydrogen concentration in the third reactor.

WO 2013/113797 describes a process for polyethylene preparation comprising three main subsequent steps of polymerized ethylene and at least one other α-olefin to get the polyethylene with, respectively, a lower molecular weight ethylene polymer, a first higher molecular weight ethylene polymer and a second higher molecular weight ethylene polymer in accordance with the sequence of a first reactor, a second reactor and a third reactor.

Even though many processes for preparing multimodal polyethylene are known and have been described, there is still a need for developing new processes for multimodal polymerization, particularly for further improving the mechanical properties of polyethylene compositions.

Therefore, it is the object of the present invention to provide a reactor system and a process for preparing multimodal polyethylenes overcoming drawbacks of the prior art, in particular to enhance the performance of a hydrogen removal unit comprised in such a reactor.

It is an further object to provide a multimodal polyethylene composition overcoming drawbacks of the prior art, in particular having improved mechanical properties, such as Charpy impact strength.

A variety of films, which may be applied as the single layer or to the core or the surface of the multi-layer films, are known in the art. Likewise, a variety of polymer compositions, in particular polyethylene compositions, for producing such films are described.

WO 2006/092377 A1 discloses a polyethylene molding composition for producing blown films. The composition is a multimodal polyethylene composition comprising a homopolymer and two different copolymers. Furthermore, the polymer composition has specific MFR₅ and density.

WO 2006/092379 A1 describes a multimodal polyethylene molding composition comprising a homopolymer and two different copolymers. The composition has a specific MFR₅ and a specific density and is described to be suitable for producing blown films.

WO 2008/049551 A1 discloses a multimodal polyethylene moulding composition for producing pipes.

US 6,716,936 B1 discloses cascaded boiling pool slurry reactors for producing bimodal low to medium density polyethylene polymers.

However, also in light of the above prior art, there is still a need to provide multimodal polyethylene compositions for preparing films and films prepared by using multimodal polyethylene compositions overcoming drawbacks of the prior art, in particular to provide high density polyethylene compositions for producing blown films having improved properties regarding output, bubble stability, mechanical strength, seal strength and toughness, in particular for producing such films having a thickness of about 45 µm or more.

Therefore, it is the further object of the present invention to provide multimodal polyethylene compositions for preparing films and films prepared this way overcoming drawbacks of the prior art, in particular overcoming the drawbacks mentioned above.

This object is achieved in accordance with the invention according to the subject-matter of the independent claims. Preferred embodiments result from the sub-claims.

The object is first of all achieved by a multimodal polyethylene composition obtainable by a process for producing a multimodal polyethylene composition
in a reactor system for a multimodal polyethylene polymerization process, the reactor system comprising;
(1).a first reactor;
(2).a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);
(3) the second reactor; and
(4) a third reactor;
the process comprising
(a) polymerizing ethylene in the absence of a comonomer in order to obtain a homopolymer in an inert hydrocarbon medium in the first reactor at a temperature from 70 to 90°C and at a pressure between 250 to 900 kPa in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene having a weight average molecular weight (Mw) from 20.000 to 90.000 g/mol, having a density ≥0.965 g/cm³ and having a MI₂ from 500 to 1.000 g/10 min according to ASTM D 1238 or a medium molecular weight polyethylene having a weight average molecular weight (Mw) from more than 90.000 to 150.000 g/mol, having a density of ≥0.965 g/cm³ and having a MI₂ from 10 to 1.000 g/10 min according to ASTM D 1238;
(b) removing in the hydrogen removal unit 98.0 to 99.8% by weight of the hydrogen comprised in a slurry mixture obtained from the first reactor at a pressure in the range of 103-145 kPa (abs) and transferring the obtained residual mixture to the second reactor;
(c) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene having an average molecular weight (Mw) from 150.000 to 1.000.000 g/mol or a first ultra high molecular weight polyethylene having a weight average molecular weight (Mw) from more than 1.000.000 to 5.000.000 g/mol in the form of a homopolymer or a copolymer and transferring a resultant mixture to the third reactor; and
(d) polymerizing ethylene, and optionally C₄ to C₁₂ α-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol, with respect to the total gas present in the vapor phase in the third reactor or optionally substantial absence of hydrogen to obtain a second high molecular weight polyethylene having an average molecular weight (Mw) from more than 150.000 to 1.000.000 g/mol or a second ultra high molecular weight polyethylene homopolymer or copolymer having a weight average molecular weight (Mw) from more than 1.000.000 to 5.000.000 g/mol,
the multimodal polyethylene composition, comprising;
(A) 40 to 65 percent by weight, preferably 43 to 52 percent by weight, most preferred 44 to 50 percent by weight, of the low molecular weight polyethylene, ;
(B) 5 to 17 percent by weight, preferably 10 to 17 percent by weight, most preferred 10 to 15 percent by weight, of the first high molecular weight polyethylene or the first ultra high molecular weight polyethylene; and
(C) 30 to 50 percent by weight, preferably 37 to 47 percent by weight, most preferably 39 to 45 percent by weight, of the second high molecular weight polyethylene or the second ultra high molecular weight polyethylene, wherein
the density of the first high molecular weight polyethylene or the first ultra high molecular weight polyethylene and the second high molecular weight polyethylene or the second ultra high molecular weight polyethylene is in the same range and both densities are in the range from 0.910 to 0.940 g/cm³; and
the molecular weight distribution of the multimodal polyethylene composition is from 18 to 30, preferably 20 to 28, measured by gel permeation chromatography.

Preferably, the hydrogen removal unit further contains a stripping column for the separation of hydrogen and a liquid diluent.

"Substantially absence" in this regard means that hydrogen is only comprised in the third reactor in an amount which cannot be avoided by technical means.

The slurry mixture obtained from the first reactor and subjected to the step of removing hydrogen in the hydrogen removal unit contains all of the solid and liquid constituents obtained in the first reactor, in particular the low molecular weight polyethylene or the medium molecular weight polyethylene. Furthermore, the slurry mixture obtained from the first reactor is saturated with hydrogen regardless the amount of hydrogen used in the first reactor.

Preferably, the removing is removing of 98.0 to 99.8 % by weight of the hydrogen, and more preferable 98.0 to 99.5 % by weight, most preferred 98.0 to 99.1 % by weight.

Preferably, the operation pressure in the hydrogen removal unit is in the range of 103-145kPa(abs), more preferably 104-130 kPa (abs), most preferred 105 to 115 kPa (abs).

Preferably, step (a) results in the low molecular weight polyethylene or medium molecular weight polyethylene, step (c) results in high molecular weight polyethylene or the ultra high molecular weight polyethylene, and step (d) results in high molecular weight polyethylene or the ultra high molecular weight polyethylene.

The weight average molecular weight (Mw) of the low molecular weight polyethylene, the medium molecular weight polyethylene, the high molecular weight polyethylene and the ultra high molecular weight polyethylene described herein are in the range of 20,000-90,000 g/mol (low), more than 90,000-150,000 g/mol (medium), more than 150,000-1,000,000 g/mol (high) and more than 1,000,000-5,000,000 g/mol (ultra high) respectively.

In a preferred embodiment, the multimodal polyethylene composition has a weight average molecular weight from 150,000 to 400,000 g/mol, preferably 200,000 to 300,000 g/mol, measured by Gel Permeation Chromatography.

Furthermore, it is preferred, that the multimodal polyethylene composition has a number average molecular weight from 5,000 to 15,000 g/mol, preferably 7,000 to 13,000 g/mol, measured by Gel Permeation Chromatography.

Preferably, the multimodal polyethylene composition has a Z average molecular weight from 1,000,000 to 3,000,000 g/mol, preferably 1,000,000 to 2,500,000 g/mol, measured by Gel Permeation Chromatography.

Preferably, the multimodal polyethylene composition has a density of at least 0.940 g/cm³, preferably 0.940 to 0.948 g/cm³, according to ASTM D 1505 and/or MI₂ from 0.03 to 0.15 g/10 min, preferably 0.03 to 0.10 g/10 min,.

Furthermore, the object is achieved by a film comprising the inventive multimodal polyethylene composition, wherein the film has a thickness from 40 to 120 µm, preferably from 45 to 80 µm.

Regarding the inventive film, it is preferred that the film substantially comprises the inventive multimodal polyethylene composition, which means that the film does comprise further constituents only in amounts which do not affect the film properties regarding output, bubble stability, mechanical strength, toughness and the like. Most preferred, the film is consisting of the inventive multimodal polyethylene composition.

Finally, the object is achieved by the use of the inventive film as an industrial bag or as a geomembrane.

A geomembrane is a low permeability synthetic membrane liner or barrier used for any geotechnical engineering to control fluid (or gas) migration in a human-made project, structure, or system.

In preferred embodiments of the inventive reactor system, the inventive process, the inventive multimodal polyethylene composition and the inventive film "comprising" is "consisting of".

In preferred embodiments "parts by weight" is "percent by weight".

The above embodiments mentioned to be preferred resulted in even more improved mechanical properties of the obtained multimodal polyethylene composition and the film prepared therefrom. Best results were achieved by combining two or more of the above preferred embodiments. Likewise, the embodiments mentioned above to be more or most preferred resulted in the best improvement of mechanical properties.

Surprisingly, it was found by the inventors that by using the inventive reactor system to produce an inventive multimodal polyethylene composition by the inventive process allows to form an inventive film using the inventive composition which is superior over the prior art. In particular, it was found by the inventors that by using the inventive multimodal polyethylene composition, a blown film can be prepared with high output, good bubble stability, high mechanical strength, high seal strength and high toughness, in particular a film of a thickness between 40 to 120 micron, preferably about 45 micron.

The invention concerns a reactor system for multimodal polyethylene polymerization. The system comprises a first reactor, a second reactor, a third reactor and a hydrogen removal unit placed between the first reactor and the second reactor.

The hydrogen depleted polyethylene from the first reactor affects the polymerization of high molecular weight in the subsequent reactors. In particular, high molecular weight leads to improved mechanical properties of polyethylene that is the advantage for various product application includes injection molding, blow molding and extrusion.The catalyst for producing the multimodal polyethylene resin of this invention is selected from a Ziegler-Natta catalyst, a single site catalyst including metallocene-bases catalyst and non- metallocene-bases catalyst or chromium based might be used, preferably conventional Ziegler-Natta catalyst or single site catalyst. The catalyst is typically used together with cocatalysts which are well known in the art.

Inert hydrocarbon is preferably aliphatic hydrocarbon including hexane, isohexane, heptane, isobutane. Preferably, hexane (most preferred n-hexane) is used. Coordination catalyst, ethylene, hydrogen and optionally α-olefin comonomer are polymerized in the first reactor. The entire product obtained from the first reactor is then transferred to the hydrogen removal unit to remove 98.0 to 99.8% by weight of hydrogen, unreacted gas and some volatiles before being fed to the second reactor to continue the polymerization. The polyethylene obtained from the second reactor is a bimodal polyethylene which is the combination of the product obtained from the first reactor and that of the second reactor. This bimodal polyethylene is then fed to the third reactor to continue the polymerization. The final multimodal (trimodal) polyethylene obtained from the third reactor is the mixture of the polymers from the first, the second and the third reactor.

The polymerization in the first, the second and the third reactor is conducted under different process conditions. As a result, the polyethylene obtained in each reactor has a different molecular weight. These can be the variation in concentration of ethylene and hydrogen in the vapor phase, temperature or amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis. Preferably, low molecular weight polyethylene or medium molecular weight polyethylene is produced in the first reactor, while high molecular weight polyethylene or ultra high molecular weight polyethylene is produced in the second and third reactor respectively.

The term first reactor refers to the stage where the low molecular weight polyethylene (LMW) or the medium molecular weight polyethylene (MMW) is produced. The term second reactor refers to the stage where the first high or ultra high molecular weight polyethylene (HMW1) is produced. The term third reactor refers to the stage where the second high molecular weight polyethylene or ultra high molecular weight (HMW2) is produced.

The term LMW refers to the low molecular weight polyethylene polymer polymerized in the first reactor having a weight average molecular weight (Mw) of 20,000-90,000 g/mol.

The term MMW refers to the medium molecular weight polyethylene polymer polymerized in the first reactor having a weight average molecular weight (Mw) of more than 90,000-150,000 g/mol.

The term HMW1 refers to the high or ultra high molecular weight polyethylene polymer polymerized in the second reactor having a weight average molecular weight (Mw) of more than 150,000 to 5,000,000 g/mol.

The term HMW2 refers to the high or ultra high molecular weight polyethylene polymer polymerized in the third reactor having the weight average molecular weight (Mw) of more than 150,000 to 5,000,000 g/mol .

The LMW or MMW is produced in the first reactor in the absence of comonomer in order to obtain a homopolymer.

To obtain the improved polyethylene properties of this invention, ethylene is polymerized in the first reactor in the absence of comonomer in order to obtain high density LMW polyethylene or MMW polyethylene having density ≥0.965 g/cm³ and MI₂ in the range of 10-1000 g/10min for LMW and 0.1-10 g/10min for MMW. In order to obtain the target density and MI in the first reactor, the polymerization conditions are controlled and adjusted. The temperature in the first reactor ranges from 70-90°C, preferably 80-85°C. Hydrogen is fed to the first reactor so as to control the molecular weight of the polyethylene. The molar ratio of hydrogen to ethylene in the vapor phase can be varied depending up on the target MI. However, the preferred molar ratio ranges from 0.01-8.0, more preferably 0.01-6.0. The first reactor is operated at pressure between 250 and 900 kPa, preferably 400-850 kPa. An amount of hydrogen present in the vapor phase of the first reactor is in the range of 0.1-95% by mole, preferably 0.1-90% by mol.

Before being fed to the second reactor, the slurry obtained from the first reactor containing LMW or MMW polyethylene preferably in hexane is transferred to a hydrogen removal unit which may have a flash drum connected with depressurization equipment preferably including one or the combination of vacuum pump, compressor, blower and ejector where the pressure in the flash drum is reduced so that volatile, unreacted gas, and hydrogen are removed from the slurry stream. The operating pressure of the hydrogen removal unit typically ranges from 103-145 kPa(abs), preferably 104-130 kPa(abs) in which 98.0 to 99.8% by weight of hydrogen can be removed, preferably 98.0 to 99.5% by weight and most preferred 98.0 to 99.1 % by weight.

In this invention, when 98.0 to 99.8% by weight of hydrogen is removed and the polymerization undergoes under these conditions of hydrogen content, very high molecular weight polymer can be achieved this way and Charpy impact strength and Flexural modulus are improved. It was surprisingly found that working outside the range of 98.0 to 99.8% by weight of hydrogen removal, the inventive effect of obtaining very high molecular weight polymer and improving Charpy Impact an Flexural Modulus could not be observed to the same extend. The effect was more pronounced in the ranges mentioned to be preferred.

The polymerization conditions of the second reactor are notably different from that of the first reactor. The temperature in the second reactor ranges from 65-90°C, preferably 68-80°C. The molar ratio of hydrogen to ethylene is not controlled in this reactor since hydrogen is not fed into the second reactor. Hydrogen in the second reactor is the hydrogen left over from the first reactor that remains in slurry stream after being flashed at the hydrogen removal unit. Polymerization pressure in the second reactor ranges from 100-3000 kPa, preferably 150-900 kPa, more preferably 150-400 kPa.

Hydrogen removal is the comparison result of the amount of the hydrogen present in the slurry mixture before and after passing through the hydrogen removal unit. The calculation of hydrogen removal is performed according to the measurement of gas composition in the first and the second reactor by gas chromatography.

After the substantial amount of hydrogen is removed to achieve the inventive concentration, slurry from the hydrogen removal unit is transferred to the second reactor to continue the polymerization. In this reactor, ethylene can be polymerized with or without α-olefin comonomer to form HMW1 polyethylene in the presence of the LMW polyethylene or MMW polyethylene obtained from the first reactor. The α-olefin comomer that is useful for the copolymerization includes C₄₋₁₂, preferably 1 -butene and 1-hexene.

After the polymerization in the second reactor, the slurry obtained is transferred to the third reactor to continue the polymerization.

The HMW2 is produced in the third reactor by polymerizing ethylene with optionally α-olefin comonomer at the presence of LMW or MMW and HMW1 obtained from the first and second reactor. The α-olefin comonomer that is useful for the copolymerization include C₄₋₁₂, preferably 1-butene and 1-hexene.

In order to obtain the target Density and the target MI in the third reactor, the polymerization conditions are controlled and adjusted. However, the polymerization conditions of the third reactor are notably different from the first and second reactor. The temperature in the third reactor ranges from 68-90°C preferably 68-80°C. Hydrogen is optionally fed to the third reactor so as to control the molecular weight of polyethylene. The molar ratio of hydrogen to ethylene can be varied depending up on the target MI. However, the preferred molar ratio ranges from 0.01-2.0. Polymerization pressure in the third reactor ranges from 250-900 kPa, preferably 250-600 kPa, and is controlled by the addition of inert gas such as nitrogen.

The amount of LMW or MMW present in the multimodal polyethylene composition of the present invention is 30-65 parts by weight. HMW1 present in the polyethylene of the present invention is 5-40 parts by weight and HMW2 present in the polyethylene of the present invention is 10-60 parts by weight. It is possible that HMW1>HMW2 or HMW1<HMW2 depending on the polymerization conditions employed.

The final (free-flow) multimodal polyethylene composition is obtained by separating hexane from the slurry discharged from the third reactor.

The resultant polyethylene powder may then be mixed with antioxidants and optionally additives before being extruded and granulated into pellets.

### Definition and Measurement Methods

MI₂, MI₅, MI₂₁: Melt flow rate (MFR) of polyethylene was measured according to ASTM D 1238 and indicated in g/10 min that determines the flowability of polymer under testing condition at 190°C with load 2.16 kg, 5 kg and 21.6 kg, respectively.

Density: Density of polyethylene was measured by observing the level to which a pellet sinks in a liquid column gradient tube, in comparison with standards of known density. This method is determination of the solid plastic after annealing at 120 °C follow ASTM D 1505.

Molecular weight and Polydispersity index (PDI): The weight average molecular weight (Mw), the number average molecular weight (Mn) and the Z average molecular weight (M_{Z}) in g/mol were analysed by gel permeation chromatography (GPC). Polydispersity index was calculated by Mw/Mn. Around 8 mg of sample was dissolved in 8 ml of 1,2,4-trichlorobenzene at 160°C for 90 min. Then the sample solution, 200 µl, was injected into the high temperature GPC with IR5, an infared detector (Polymer Char, Spain) with flow rate of 0.5 ml/min at 145°C in column zone and 160°C in detector zone. The data was processed by GPC One® software, Polymer Char, Spain.

### Intrinsic Viscosity (IV)

The test method covers the determination of the dilute solution viscosity of PE at 135 °C or ultra high molecular weight polyethylene (UHMWPE) at 150°C. The polymeric solution was prepared by dissolving polymer in Decalin with 0.2% wt/vol stabilizer (Irganox 1010 or equivalent). The details are given for the determination of IV followed ASTM D2515.

Crystallinity: The crystallinity is frequently used for characterization by Differential Scanning Calorimetry (DSC) follow ASTM D 3418. Samples were identified by peak temperature and enthalpy, as well as the % crystallinity was calculated from the peak area.

Charpy impact strength: Charpy impact strength is determined according to ISO179 at 23°C, 0°C and -20°C and showed in the unit kJ/m².

Flexural Modulus: The specimen was prepared and performed the test according to ISO178. The flexural tests were done using a universal testing machine equipped with three point bending fixture.

Film bubble stability: It was determined during the blown film process, the axial oscillation of the film bubble was observed during increasing the nip roll take up speed and continue more than 30 minute. Good bubble stability is defined when film is not oscillating and bubble is not break.

Output: The film was blown following the blown film conditions. Then the film was collected for a minute and weight. The output of film from unit of g/min is then calculated and reported in the unit of kg/hr.

Dart drop impact: This test method follow method A of ASTM D1709 that covers the determination of the energy that cause plastic film to fail under specified conditions of free-falling dart impact. This energy is expressed in terms of the weight of the falling from a specified height, 0.66 ± 0.01 m, which result in 50% failure of specimens tested.

Puncture: This testing is SCG in-housed method that a specimen is clamped without tension between circular plates of a ring clamp attachment in UTM. A force is exerted against the center of the unsupported portion of the test specimen by a solid steel rod attached to the load indicator until rupture of specimen occurs. The maximum force recorded is the value of puncture resistance

Tensile and elongation of film: These test methods cover the determination of tensile properties of film (less than 1.0 mm. in thickness) followed ASTM D882. The testing employs a constant rate of grip separation, 500 mm/min.

Tear strength: This test method covers the determination of the average force to propagate tearing through a specified length of plastic film using an Elmendorf-type tearing tester followed ASTM D 1922.

Seal strength: Seal strength is the test method measures the force required to separate a test strip of material containing the seal, that is not only relevant to opening force and package integrity, but to measuring the packaging process-ability to produce consistent seals. Seal strength at some minimum level is a necessary package requirement, and at times it is desirable to limit the strength of the seal to facilitate opening.

Melt strength and Draw down ratio (DD) : They are determined using GOEFFERT Rheotens. The melt extrudate is performed by single screw extruder with 2mm die diameter at melt temperature 190oC.the extrudate pass through Rheotens haul-off with controlled the ramp speed. The haul-off force is record. The force(N) is collect as a function of draw ratio(DD). Melt strength and draw down ratio is define as the force at break and draw down ratio at break, respectively.

### Experimental and examples

### Composition related examples

### Experimental and examples

The medium or high density polyethylene preparation was carried out in three reactors in series. Ethylene, hydrogen, hexane, catalyst and TEA (triethyl aluminum) co-catalyst were fed into a first reactor in amounts shown in table 1. A commercial available Ziegler-Natta catalyst was used. The catalyst preparation is for example described in Hungary patent application 08 00771r. The polymerization in first reactor was carried out to make a low molecular weight polyethylene or medium molecular weight polyethylene. All of polymerized slurry polymer from first reactor was then transferred to a hydrogen removal unit to remove unreacted gas and some of hexane from polymer. The operating pressure in the hydrogen removal unit was be varied in a range of 100 to 115 kPa (abs) where residual hydrogen was removed more than 98 % by weight but not more than 99.8 % by weight from hexane before transferring to a second polymerization reactor. Some fresh hexane, ethylene and/or comonomer were fed into second reactor to produce first high molecular weight polyethylene (HMW1). All of polymerized polymer from second reactor was fed into the third reactor which produce second high molecular weight polyethylene (HMW2). Ethylene, comonomer, hexane and/or hydrogen were fed into the third reactor.

### Comparative Example 1 (CE1)

A homopolymer was produced in first reactor to obtain a low molecular weight portion before transferring such polymer to hydrogen removal unit. Reactant mixture was introduced into the hydrogen removal unit to separate the unreacted mixture from the polymer. Residual hydrogen was removed 97.6% by weight when hydrogen removal unit was operated at pressure of 150 kPa (abs). The low molecular weight polymer was then transferred to the second reactor to produce a first high molecular weight polymer. Final, produced polymer from second reactor was transferred to the third reactor to create a second high molecular weight polymer. In third, a copolymerization was carried out by feeding 1-butene as a comonomer.

### Example 1 (E1) (not in accordance with the invention)

Example 1 was carried out in the same manner as Comparative Example 1 except that the hydrogen removal unit was operated at pressure of 115 kPa (abs). The residual of hydrogen from first reactor was removed 98.0% by weight. Characteristic properties of these multimodal polymers are shown in Table 2. As it can be seen, an improvement of stiffness-impact balance was observed when the percentage of removed hydrogen residual increased compared with the properties of Comparative Example 1.

### Example 2 (E2) (not in accordance with the invention)

Example 2 was carried out in the same manner as Comparative Example 1 except that the hydrogen removal unit was operated at pressure of 105 kPa (abs). The residual hydrogen from the first reactor was removed to an extend of 99.1% by weight. The operational of hydrogen removal unit under this pressure leads to an expansion of a polymer properties range. As seen in Table 2, a final melt flow rate of E2 was lower than a final melt flow rate of CE1 resulted in an improvement of Charpy impact strength while still maintained the flexural modulus.

### Comparative Example 2 (CE2)

Comparative Example 2 was carried out in the same manner as Comparative Example 1 except that the hydrogen removal unit was operated at pressure of 102 kPa (abs). The residual of hydrogen from first reactor was removed to an extend of 99.9% by weight. The operational of hydrogen removal unit under this pressure leads to an expansion of a polymer properties range. As seen in Table 2, the final melt flow rate and a density of CE2 were quite similar to a final melt flow rate and a density of E2. A decay of Charpy impact strength was showed in CE2 compared to E2.

### Comparative Example 3 (CE3)

A homopolymer was produced in a first reactor to obtain a low molecular weight portion before transferring the polymer to a hydrogen removal unit. Reactant mixture was introduced into the hydrogen removal unit to separate the unreacted mixture from the polymer. Hydrogen residual was removed to an extend of 97.9% by weight when hydrogen removal unit was operated at pressure of 150 kPa (abs). The low molecular weight polymer was then transferred to a second reactor to produce an ultra high molecular weight polymer. In the second reactor, a copolymerization was carried out by feeding 1-butene as a comonomer. Finally, in-situ bimodal copolymer from second reactor was transferred to a third reactor to create a high molecular weight copolymer portion. Characteristic properties of this multimodal polymers is shown in Table 2. A significant improvement in Charpy impact strength at room temperature could be obtained by decreasing a density of final polymer when co-polymer was produced in both the second and the third reactor.

### Example 3 (E3) (not in accordance with the invention)

Example 3 was carried out in the same manner as Comparative Example 3 except that the hydrogen removal unit was operated at pressure of 105 kPa (abs). The residual of hydrogen from first reactor was removed to an extend of 98.8% by weight. The polymer obtained by this process operation had a melt flow rate of 0.195 g/10min (5kg loading) lower than such value obtained from CE3. As seen in Table 2, it revealed an improvement of stiffness-impact balance when the percentage of removed hydrogen residual increases compared with the properties of Comparative Example 3.

### Example 4 (E4) (not in accordance with the invention)

A homopolymer was produced in the first reactor to obtain a medium molecular weight portion before transferring such polymer to hydrogen removal unit. The hydrogen removal unit was operated at pressure of 105 kPa (abs) to separate the unreacted mixture from the polymer. The residual of hydrogen from first reactor was removed to an extend of 98.9% by weight. The medium molecular weight polymer was then transferred to the second reactor to produce a first ultra high molecular weight polymer. Finally, produced polymer from second reactor was transferred to the third reactor to create a second ultra high molecular weight polymer. The second and third reactors are operated under hydrogen depleted polyethylene polymerization. The processable in-situ ultra high molecular weight polyethylene is produced by this process operation leads to an excellent improvement of Charpy impact strength while still maintained the flexural modulus. The conventional UHMWPE with very high IV was known that it was unable to measured MI21. The inventive example E4 with IV of 9 dl/g show good melt flow ability beyond the known art.

**Table 1**

| | CE1 | E1 | E2 | CE2 | CE3 | E3 | E4 |
|---|---|---|---|---|---|---|---|
| W_{A}, % | 55 | 55 | 55 | 55 | 45 | 45 | 30 |
| W_{B}, % | 20 | 20 | 20 | 20 | 25 | 25 | 30 |
| W_{C}, % | 25 | 25 | 25 | 25 | 30 | 30 | 40 |

| **First reactor** | | | | | | | |
|---|---|---|---|---|---|---|---|
| Polymerization type | Homo | Homo | Homo | Homo | Homo | Homo | Homo |
| Temperature, °C | 80 | 80 | 80 | 80 | 80 | 80 | 80 |
| Total pressure, kPa | 800 | 800 | 800 | 800 | 800 | 800 | 800 |
| Ethylene, g | 1,100.72 | 1,100.70 | 1,100.86 | 1,100.74 | 900.30 | 900.30 | 540.50 |
| Hydrogen, g | 1.62 | 1.62 | 1.55 | 1.55 | 2.97 | 2.99 | 1.34 |
| Pressure, kPa (abs) | 150 | 115 | 105 | 102 | 150 | 105 | 105 |
| Hydrogen remove, % | 97.6 | 98.0 | 99.1 | 99.9 | 97.9 | 98.8 | 98.9 |

| **Second reactor** | | | | | | | |
|---|---|---|---|---|---|---|---|
| Polymerization type | Homo | Homo | Homo | Homo | Copo | Copo | Homo |
| Temperature, °C | 70 | 70 | 70 | 70 | 70 | 70 | 70 |
| Total pressure, kPa | 250 | 250 | 250 | 250 | 250 | 250 | 400 |
| Ethylene, g | 400.52 | 400.81 | 400.35 | 400.06 | 500.17 | 500.31 | 540.36 |
| Hydrogen, g | 0 | 0 | 0 | 0 | 0 | 0 | 0 |
| 1-butene, g | 0 | 0 | 0 | 0 | 18.84 | 18.91 | 0 |

| **Third ractor** | | | | | | | |
|---|---|---|---|---|---|---|---|
| Polymerization type | Copo | Copo | Copo | Copo | Copo | Copo | Homo |
| Temperature, °C | 70 | 70 | 70 | 70 | 70 | 70 | 80 |
| Total pressure, kPa | 400 | 400 | 400 | 400 | 400 | 400 | 600 |
| Ethylene, g | 500.74 | 500.11 | 500.30 | 500.63 | 600.02 | 601.19 | 720.60 |
| Hydrogen, g | 0 | 0.001 | 0.001 | 0.001 | 0 | 0.001 | 0 |
| 1-butene, g | 35.05 | 30.01 | 30.03 | 30.04 | 60.01 | 60.04 | 0 |

| | | | | | | | |
|---|---|---|---|---|---|---|---|
| W_{A} means percent by weight of Polymer in the first reactor W_{B} means percent by weight of Polymer in the second reactor W_{C} means percent by weight of Polymer in the third reactor | | | | | | | |

**Table 2**

| | CE1 | E1 | E2 | CE2 | CE3 | E3 | E4 |
|---|---|---|---|---|---|---|---|
| **Powder** | | | | | | | |
| MI₅, g/10min | 0.474 | 0.372 | 0.240 | 0.242 | 0.275 | 0.200 | - |
| MI₂₁, g/10min | 13.83 | 10.80 | 7.38 | 7.23 | 6.40 | 4.81 | 0.145 |
| Density, g/cm³ | 0.9565 | 0.9578 | 0.9555 | 0.9567 | 0.9441 | 0.9438 | 0.9534 |
| IV, dl/g | | - | - | - | - | - | 9.00 |
| Mw | 276,413 | 244,279 | 291,295 | 319,487 | 252,160 | 306,468 | 868,813 |
| Mn | 8,877 | 8,724 | 8,843 | 8,472 | 8,016 | 7,637 | 24,107 |
| Mz | 2,788,607 | 2,370,678 | 3,401,041 | 4,135,007 | 1,638,224 | 2,643,953 | 5,112,060 |
| PDI | 31.14 | 28.00 | 32.94 | 37.71 | 31.46 | 40.13 | 36.04 |

| **Pellet** | | | | | | | |
|---|---|---|---|---|---|---|---|
| MI₅, g/10min | 0.436 | 0.410 | 0.232 | 0.199 | 0.298 | 0.195 | - |
| MI₂₁, g/10min | 14.46 | 11.68 | 7.876 | 6.696 | 7.485 | 4.604 | - |
| Density, g/cm³ | 0.9577 | 0.9574 | 0.9568 | 0.9566 | 0.9442 | 0.9440 | - |
| IV, dl/g | 2.97 | 3.03 | 3.52 | 3.64 | 3.12 | 3.37 | - |
| %Crystallinity, % | 64.70 | 67.24 | 64.78 | 66.16 | 57.49 | 54.05 | 68.23 |
| Charpy, 23 °C, kJ/m² | 23.5 | 29.9 | 35.3 | 30.5 | 47.9 | 50.9 | 84.4 |
| Flexural modulus, MPa | 1,130 | 1,210. | 1,123. | 1,123. | 727 | 785 | 1,109 |

### Film related examples

To prepare an inventive film from the above inventive compositions, it was surprisingly found that a sub-range of the multimodal polyethylene composition which might be obtained using the inventive reactor system is particularly preferred. In detail, it was found that compositions suitable to form the inventive film are as follows and have the following properties. The following comparative examples refer to the film related compositions.

### Example 5 (E5)

The inventive example E5 was produced according to the inventive process for making multimodal polyethylene composition wherein;
the density of the ultra high molecular weight polyethylene and the high molecular weight polyethylene copolymer is in the same range and both densities are in the range from 0.910 to 0.940 g/cm3; and, wherein the molecular weight distribution of the multimodal polyethylene composition is from 18 to 30, preferably 20 to 28, measured by gel permeation chromatography.

### Comparative Example (CE4)

The comparative example CE4 was produced according to the inventive process for making multimodal polyethylene composition where in the density of the ultra high molecular weight polyethylene and the high molecular weight polyethylene copolymer is not the same. Also the density and molecular weight distribution is out of the specific range for high impact film.

**Table 3: Process condition of inventive example (E5) and comparative example (CE4)**

| **Condition** | **Unit** | **Inventive Example E5** | **Comparative Example CE4** |
|---|---|---|---|
| **1st Reactor** | | | |
| Split ratio | % | 45-47 | 46-49 |
| Temperature | (°C) | 81-85 | 78-81 |
| Pressure | kPa | 600-650 | 800-850 |
| Hydrogen flow rate | NL/h | 229 | 220 |

| **2nd Reactor** | | | |
|---|---|---|---|
| Split ratio | % | 10-12 | 15-20 |
| Temperature | (°C) | 70-75 | 70-75 |
| Pressure | kPa | 150-300 | 230-280 |
| Hydrogen flow rate | NL/h | 0 | 0 |
| Co-monomer | kg/h | 0.71 | 0.69 |
| Comonomer/Ethylene Feed | - | 0.222 | 0.216 |
| H2 removal | | 98.9 | 99.6 |
| Comonomer type | - | 1-butene | 1-butene |

| **3rd Reactor** | | | |
|---|---|---|---|
| Split ratio | % | 40-41 | 32-35 |
| Temperature | (°C) | 70-75 | 70-75 |
| Pressure | kPa | 150-300 | 300-400 |
| Hydrogen flow rate | NL/h | 9.3 | 9.5 |
| Co-monomer | kg/h | 0.75 | 0.80 |
| Comonomer/Ethylene Feed | - | 0.068 | 0.073 |
| Comonomer type | - | 1-butene | 1-butene |

### Comparative Example 5 (CE5)

The comparative example 5 (CE5) is the polyethylene blend consisting of 60 wt% bimodal HDPE, 20 wt% LLDPE with 1-butene comonomer and 20 wt% LLDPE with 1-Octene comonomer where in;
- HDPE is the commercial resin EL-Lene™ H5604F with MI₂ of 0.03 g/10min and density of 0.958 g/cm³
- LLDPE with 1-butene comonomer is the commercial resin Dow™ Butene 1211 with MI₂ of 1.0 g/10min and density of 0.918 g/cm³
- LLDPE with 1-Octene comonomer is the commercial resin Dowlex™ 2045G with MI₂ of 1.0 g/10min and density of 0.922 g/cm³

It is generally known that the blend of HDPE with LLDPE is the practical way in film manufacturing to get better film strength in particular dart drop impact and tear strength.

From the molding composition so prepared, a film was produced in the following way. A film having a thickness of 45 micron was produced on the internal blown film machine comprising a single screw extruder connecting with tubular blow film apparatus. The temperature setting from extruder to the die is from 175 to 205 °C. The screw speed and nip roll take up speed are 60 rpm and 20 rpm, respectively. The film were produced at a blow-up ratio of 4:1 and a neck height of 30 cm with bubble diameter of 23 cm and film lay flat of 39 cm.

The films were further evaluated for processability and mechanical properties in both machine direction, MD and transverse direction, TD as shown in table 4.

**Table 4: Properties of polyethylene compositions and film thereof.**

| Properties | Comparative Example CE4 | Comparative Example CE5 | Inventive Example E5 |
|---|---|---|---|
| *Resin* | | | |
| MI₂, g/10min | 0.049 | 0.221 | 0.03 |
| MI₂ of LMW g/10 min | 640 | N/A | 729 |
| Density, g/cm³ | 0.9419 | 0.9415 | 0.9476 |
| Density of the first high molecular weight polyethylene or the first ultra high molecular weight polyethylene, g/cm³ | 0.9412 | N/A | 0.9237 |
| Density of the first high molecular weight polyethylene or the first ultra high molecular weight polyethylene, g/cm³ | 0.9026 | N/A | 0.9290 |
| Mn, g/mol | 8,104 | 10,992 | 10,960 |
| Mw, g/mol | 259,821 | 237,557 | 250,707 |
| Mz, g/mol | 2,231,636 | 1,886,133 | 1,530,608 |
| PDI | 32.1 | 21.6 | 22.9 |
| Melt strength at break, N | N/A | 0.22 | 0.24 |
| Draw down ratio at break | N/A | 10.9 | 11.3 |

| *Film* | | | |
|---|---|---|---|
| Film Thickness, micron | 45 | 45 | 45 |
| Output, kg/hr | N/A | 15 | 17 |
| Bubble Stability | Oscillating | Good | Good |
| Dart drop impact, g | N/A | 203 | 343 |
| Tensile Strength at Break (MD), kg/cm² | N/A | 501 | 535 |
| Tensile Strength at Break (TD), kg/cm² | N/A | 325 | 519 |
| Elongation at Break (MD), % | N/A | 736 | 763 |
| Elongation at Break (TD), % | N/A | 738 | 764 |
| Tear Strength (MD), g | N/A | 83 | 92 |
| Tear Strength (TD), g | N/A | 583 | 428 |
| Puncture Energy, N-cm/u | N/A | 11.11 | 11.82 |
| Max Seal strength @140 C (kgf) | N/A | 2.019 | 2.141 |

The comparative example CE4 produced according the inventive process with the compositon out of the specific range of multimodal polyethylene composition for high impact film. The bubble was found to be oscillating during the film forming. The melt fracture and gel were found and effect to the overall film appearance. So the film was not further evaluated for mechanical properties. It was supposed that too much ultrahigh molecular weight was incorporated in the comparative example CE4. The problem was not found in the inventive example E5 which produced according to the inventive process with the specific range of multimodal polyethylene composition for high impact film. The results obviously showed the significantly improvement of output and mechanical properties including dart drop impact and tensile strength over the comparative example CE5 even the LLDPE is included in the formulation. Other properties are mostly equivalent to the blend of HDPE with LLDPE.

The evidence supports that the multimodal polyethylene composition produced according to the inventive process with specific range of multimodal polyethylene composition provides a good balance of mechanical strength with processing properties for industrial film and geomembrane.

## Claims

1. A multimodal polyethylene composition obtainable by a process for producing a multimodal polyethylene composition
in a reactor system for a multimodal polyethylene polymerization process, the reactor system comprising;
(1).a first reactor;
(2).a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);
(3) the second reactor; and
(4)a third reactor;
the process comprising
(a) polymerizing ethylene in the absence of a comonomer in order to obtain a homopolymer in an inert hydrocarbon medium in the first reactor at a temperature from 70 to 90°C and at a pressure between 250 to 900 kPa in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene having a weight average molecular weight (Mw) from 20.000 to 90.000 g/mol, having a density ≥0.965 g/cm³ and having a MI₂ from 500 to 1.000 g/10 min according to ASTM D 1238 or a medium molecular weight polyethylene having a weight average molecular weight (Mw) from more than 90.000 to 150.000 g/mol, having a density of ≥0.965 g/cm³ and having a MI₂ from 10 to 1.000 g/10 min according to ASTM D 1238;
(b) removing in the hydrogen removal unit 98.0 to 99.8% by weight of the hydrogen comprised in a slurry mixture obtained from the first reactor at a pressure in the range of 103-145 kPa (abs) and transferring the obtained residual mixture to the second reactor;
(c) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene having an average molecular weight (Mw) from 150.000 to 1.000.000 g/mol or a first ultra high molecular weight polyethylene having a weight average molecular weight (Mw) from more than 1.000.000 to 5.000.000 g/mol in the form of a homopolymer or a copolymer and transferring a resultant mixture to the third reactor; and
(d) polymerizing ethylene, and optionally C₄ to C₁₂ α-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol, with respect to the total gas present in the vapor phase in the third reactor or optionally substantial absence of hydrogen to obtain a second high molecular weight polyethylene having an average molecular weight (Mw) from more than 150.000 to 1.000.000 g/mol or a second ultra high molecular weight polyethylene homopolymer or copolymer having a weight average molecular weight (Mw) from more than 1.000.000 to 5.000.000 g/mol,
the multimodal polyethylene composition, comprising;
(A) 40 to 65 percent by weight, preferably 43 to 52 percent by weight, most preferred 44 to 50 percent by weight, of the low molecular weight polyethylene, ;
(B) 5 to 17 percent by weight, preferably 10 to 17 percent by weight, most preferred 10 to 15 percent by weight, of the first high molecular weight polyethylene or the first ultra high molecular weight polyethylene; and
(C) 30 to 50 percent by weight, preferably 37 to 47 percent by weight, most preferably 39 to 45 percent by weight, of the second high molecular weight polyethylene or the second ultra high molecular weight polyethylene, wherein
the density of the first high molecular weight polyethylene or the first ultra high molecular weight polyethylene and the second high molecular weight polyethylene or the second ultra high molecular weight polyethylene is in the same range and both densities are in the range from 0.910 to 0.940 g/cm³; and the molecular weight distribution of the multimodal polyethylene composition is from 18 to 30, preferably 20 to 28, measured by gel permeation chromatography.

2. The multimodal polyethylene composition according to claim 1, wherein the depressurization equipment allows to adjust the operating pressure in the hydrogen removal unit to a pressure in the range of 103-145 kPa (abs), preferably 104-130 kPa (abs), most preferably 105 to 115 kPa (abs).

3. The multimodal polyethylene composition according to claim 1 or 2, wherein the hydrogen removal unit further contains a stripping column for the separation of hydrogen and a liquid diluent.

4. The multimodal polyethylene composition according to any of the preceding claims, wherein the removing is removing of 98.0-99.8% by weight of the hydrogen, more preferable 98.0-99.5% by weight, and most preferred 98.0 to 99.1 % by weight.

5. The multimodal polyethylene composition according to any of the preceding claims, wherein the operation pressure in the hydrogen removal unit is in the range of 103-145kPa(abs), more preferably 104-130kPa (abs), and most preferred 105 to 115 kPa (abs).

6. The multimodal polyethylene composition according to any of the preceding claims, wherein the multimodal polyethylene composition has a weight average molecular weight from 150,000 to 400,000 g/mol, preferably 200,000 to 300,000 g/mol, measured by Gel Permeation Chromatography.

7. The multimodal polyethylene composition according to any of the preceding claims, wherein the multimodal polyethylene composition has a number average molecular weight from 5,000 to 15,000 g/mol, preferably 7,000 to 13,000 g/mol, measured by Gel Permeation Chromatography.

8. The multimodal polyethylene composition according to any of the preceding claims, wherein the multimodal polyethylene composition has a Z average molecular weight from 1,000,000 to 3,000,000 g/mol, preferably 1,000,000 to 2,500,000 g/mol, measured by Gel Permeation Chromatography.

9. The polyethylene composition according to any of the preceding claims, wherein the multimodal polyethylene composition has a density of at least 0.940 g/cm³, preferably 0.940 to 0.948 g/cm³, according to ASTM D 1505 and/or MI₂ from 0.03 to 0.15 g/10 min, preferably 0.03 to 0.10 g/10 min.

10. Film comprising the multimodal polyethylene composition according to any of the preceding claims, wherein the film has a thickness from 40 to 120 µm, preferably from 45 to 80 µm.

11. Use of the film according to claim 10 as an industrial bag or as a geomembrane.

## Patentansprüche

1. Multimodale Polyethylenzusammensetzung, erhältlich durch ein Verfahren zum Herstellen einer multimodalen Polyethylenzusammensetzung
in einem Reaktorsystem für ein Verfahren zur Polymerisation eines multimodalen Polyethylens, das Reaktorsystem umfassend:
(1) einen ersten Reaktor;
(2) eine Einheit zum Entfernen von Wasserstoff, die zwischen dem ersten Reaktor und einem zweiten Reaktor angeordnet ist, umfassend zumindest einen Kessel, der mit Mitteln zum Reduzieren des Drucks verbunden ist, vorzugsweise ausgewählt aus einer Vakuumpumpe, einem Kompressor, einem Gebläse, einem Ejektor oder einer Kombination davon, wobei es die Mittel zum Reduzieren des Drucks erlauben, einen Betriebsdruck auf einen Druck in einem Bereich von 100 bis 200 kPa (abs) einzustellen;
(3) den zweiten Reaktor; und
(4) einen dritten Reaktor;
das Verfahren umfassend
(a) Polymerisieren von Ethylen in der Abwesenheit eines Comonomers, um ein Homopolymer zu erhalten, in einem inerten Kohlenwasserstoffmedium in dem ersten Reaktor bei einer Temperatur von 70 bis 90°C und bei einem Druck zwischen 250 bis 900 kPa in der Gegenwart eines Katalysatorsystems, ausgewählt aus Ziegler-Natta-Katalysator oder Metallocen, und Wasserstoff in einer Menge von 0,1 bis 95 Mol%, bezogen auf das gesamte Gas, das in der Gasphase in dem ersten Reaktor vorhanden ist, um ein Polyethylen mit niedrigem Molekulargewicht mit einem Gewichtsmittel des Molekulargewichts (Mw) von 20.000 bis 90.000 g/mol, mit einer Dichte von ≥0,965 g/cm³ und mit einem MI₂ von 500 bis 1.000 g/10 min gemäß ASTM D 1238 oder ein Polyethylen mit mittlerem Molekulargewicht mit einem Gewichtsmittel des Molekulargewichts (Mw) von mehr als 90.000 bis 150.000 g/mol, mit einer Dichte von ≥0,965 g/cm³ und mit einem MI₂ von 10 bis 1.000 g/10 min gemäß ASTM D 1238 zu erhalten;
(b) Entfernen von 98,0 bis 99,8 Gew.-% des Wasserstoffs, der in einem Aufschlämmungsgemisch, das im ersten Reaktor erhalten wird, vorhanden ist, in der Einheit zum Entfernen von Wasserstoff bei einem Druck in dem Bereich von 103-145 kPa (abs) und Überführen des erhaltenen verbleibenden Gemischs in den zweiten Reaktor;
(c) Polymerisieren von Ethylen und optional C₄-C₁₂-α-Olefincomonomer in dem zweiten Reaktor in Gegenwart eines Katalysatorsystems, ausgewählt aus Ziegler-Natta-Katalysator oder Metallocen, und in der Gegenwart von Wasserstoff in einer Menge, erhalten in Schritt (b), um ein erstes Polyethylen mit hohem Molekulargewicht mit einem Gewichtsmittel des Molekulargewichts (Mw) von 150.000 bis 1.000.000 g/mol oder ein erstes Polyethylen mit ultrahohem Molekulargewicht mit einem Gewichtsmittel des Molekulargewichts (Mw) von mehr als 1.000.000 bis 5.000.000 g/mol in Form eines Homopolymers oder eines Copolymers zu erhalten, und Überführen eines erhaltenen Gemischs in den dritten Reaktor; und
(d) Polymerisieren von Ethylen und optional C₄-C₁₂-α-Olefincomonomer in dem dritten Reaktor in der Gegenwart eines Katalysatorsystems, ausgewählt aus Ziegler-Natta-Katalysator oder Metallocen, und Wasserstoff, wobei die Menge an Wasserstoff in dem dritten Reaktor in einem Bereich von 0,1 bis 70 mol%, vorzugsweise 0,1 bis 60 mol%, ist, bezogen auf das gesamte Gas, das in der Gasphase des dritten Reaktors vorhanden ist, oder um optional in wesentlicher Abwesenheit von Wasserstoff, um ein zweites Polyethylen mit hohem Molekulargewicht mit einem Gewichtsmittel des Molekulargewichts (Mw) von mehr als 150.000 bis 1.000.000 g/mol oder ein zweites Polyethylenhomopolymer oder Copolymer mit ultrahohem Molekulargewicht mit einem Gewichtsmittel des Molekulargewichts von (Mw) von mehr als 1.000.000 bis 5.000.000 g/mol zu erhalten,
die multimodale Polyethylenzusammensetzung, umfassend:
(A) 40 bis 65 Gewichtsprozent, vorzugsweise 43 bis 52 Gewichtsprozent, am meisten bevorzugt 44 bis 50 Gewichtsprozent des Polyethylens mit niedrigem Molekulargewicht;
(B) 5 bis 17 Gewichtsprozent, vorzugsweise 10 bis 17 Gewichtsprozent, am meisten bevorzugt 10 bis 15 Gewichtsprozent des ersten Polyethylens mit hohem Molekulargewicht oder des ersten Polyethylens mit ultrahohem Molekulargewicht; und
(C) 30 bis 50 Gewichtsprozent, vorzugsweise 37 bis 47 Gewichtsprozent, am meisten bevorzugt 39 bis 45 Gewichtsprozent des zweiten Polyethylens mit hohem Molekulargewicht oder des zweiten Polyethylens mit ultrahohem Molekulargewicht, wobei
die Dichte des ersten Polyethylens mit hohem Molekulargewicht oder des ersten Polyethylens mit ultrahohem Molekulargewicht und des zweiten Polyethylens mit hohem Molekulargewicht oder des zweiten Polyethylens mit ultrahohem Molekulargewicht in dem gleichen Bereich ist und beide Dichten in dem Bereich von 0,910 bis 0,940 g/cm³ sind; und
die Molekulargewichtsverteilung der multimodalen Polyethylenzusammensetzung von 18 bis 30 ist, vorzugsweise von 20 bis 28, gemessen mittels Gelpermeationschromatographie.

2. Multimodale Polyethylenzusammensetzung nach Anspruch 1, wobei die Mittel zum Reduzieren des Drucks das Einstellen des Betriebsdrucks in der Einheit zum Entfernen von Wasserstoff auf einen Druck in dem Bereich von 103 bis 145 kPa (abs), vorzugsweise 104 bis 130 kPa (abs), am meisten bevorzugt 105 bis 115 kPa (abs), erlauben.

3. Multimodale Polyethylenzusammensetzung nach Anspruch 1 oder 2, wobei die Einheit zum Entfernen von Wasserstoff ferner eine Strippkolonne zum Abtrennen von Wasserstoff und einem flüssigen Verdünnungsmittel enthält.

4. Multimodale Polyethylenzusammensetzung nach einem der vorangehenden Ansprüche, wobei das Entfernen das Entfernen von 98,0 bis 99,8 Gew.-% des Wasserstoffs ist, vorzugsweise 98,0 bis 99,5 Gew.-96, am meisten bevorzugt 98,0 bis 99,1 Gew.-%.

5. Multimodale Polyethylenzusammensetzung nach einem der vorangehenden Ansprüche, wobei der Betriebsdruck in der Einheit zum Entfernen von Wasserstoff in einem Bereich von 103 bis 145 kPa (abs), darüber hinaus bevorzugt 104-130 kPa (abs), und am meisten bevorzugt 105 bis 115 kPa (abs), ist.

6. Multimodale Polyethylenzusammensetzung nach einem der vorangehenden Ansprüche, wobei die multimodale Polyethylenzusammensetzung ein Gewichtsmittel des Molekulargewichts von 150.000 bis 400.000 g/mol, vorzugsweise 200.000 bis 300.000 g/mol, gemessen durch Gelpermeationschromatographie, hat.

7. Multimodale Polyethylenzusammensetzung nach einem der vorangehenden Ansprüche, wobei die multimodale Polyethylenzusammensetzung ein Zahlenmittel des Molekulargewichts von 5.000 bis 15.000 g/mol, vorzugsweise 7.000 bis 13.000 g/mol, gemessen durch Gelpermeationschromatographie, hat.

8. Multimodale Polyethylenzusammensetzung nach einem der vorangehenden Ansprüche, wobei die multimodale Polyethylenzusammensetzung ein Z-Mittel des Molekulargewichts von 1.000.000 bis 3.000.000 g/mol, vorzugsweise 1.000.000 bis 2.500.000 g/mol, gemessen durch Gelpermeationschromatographie, hat.

9. Polyethylenzusammensetzung nach einem der vorangehenden Ansprüche, wobei die multimodale Polyethylenzusammensetzung eine Dichte von zumindest 0,940 g/cm³, vorzugsweise 0,940 bis 0,948 g/cm³ gemäß ASTM D 1505 und/oder MI₂ von 0,03 bis 0,15 g/10 min, vorzugsweise 0,03 bis 0,10 g/10 min, hat.

10. Film, umfassend die multimodale Polyethylenzusammensetzung nach einem der vorangehenden Ansprüche, wobei der Film eine Dicke von 40 bis 120 µm, vorzugsweise von 45 bis 80 µm, hat.

11. Verwendung des Films nach Anspruch 10 als Industriesack oder als eine Geomembran.

## Revendications

1. Composition de polyéthylène multimodal pouvant être obtenue par un processus de production d'une composition de polyéthylène multimodal.
dans un système de réacteurs pour processus de polymérisation de polyéthylène multimodal, le système de réacteurs comprenant :
(1) un premier réacteur ;
(2) une unité d'élimination de l'hydrogène disposée entre le premier réacteur et le deuxième réacteur comprenant au moins un récipient relié à un équipement de dépressurisation, préférablement sélectionné parmi une pompe à vide, un compresseur, une soufflerie, un éjecteur ou une combinaison de ceux-ci, l'équipement de dépressurisation permettant d'ajuster une pression de fonctionnement à une pression située dans l'intervalle de 100 à 200 kPa (abs) ;
(3) le deuxième réacteur ; et
(4) un troisième réacteur ;
le processus comprenant les étapes consistant à
(a) polymériser l'éthylène en l'absence d'un comonomère de manière à obtenir un homopolymère dans un milieu d'hydrocarbures inertes dans le premier réacteur à une température allant de 70 à 90 °C et à une pression comprise entre 250 à 900 kPa en présence d'un système catalytique, sélectionné parmi le catalyseur Ziegler-Natta ou le métallocène, et l'hydrogène en une quantité de 0,1 à 95 % par mol par rapport au gaz total présent dans la phase vapeur dans le premier réacteur de manière à obtenir un polyéthylène de faible poids moléculaire ayant un poids moléculaire moyen en poids (Mw) allant de 20.000 à 90.000 g/mol, ayant une densité ≥ 0,965 g/cm³ et ayant un indice de fusion MI₂ allant de 500 à 1000 g/10 min selon la norme D 1238 de l'ASTM ou un polyéthylène de poids moléculaire moyen ayant un poids moléculaire moyen en poids (Mw) supérieur à 90,000 à 150,000 g/mol, ayant une densité ≥ 0,965 g/cm³ et ayant un indice de fusion MI₂ allant de 10 à 1,000 g/10 min selon la norme D 1238 de l'ASTM.
(b) éliminer de l'unité d'élimination de l'hydrogène 98,00 à 99,8 % en poids de l'hydrogène contenu dans un mélange de suspension obtenu du premier réacteur à une pression située dans l'intervalle de 103 à 145 kPa (abs) et transférer le mélange résiduel obtenu dans le deuxième réacteur ;
(c) polymériser l'éthylène et facultativement le comonomère d'∝-oléfine en C₄ à C₁₂ dans le deuxième réacteur en présence d'un système catalyseur, sélectionné parmi le catalyseur Ziegler-Natta ou le métallocène, et en présence de l'hydrogène en une quantité obtenue à l'étape (b) de manière à obtenir un premier polyéthylène de poids moléculaire élevé ayant un poids moléculaire moyen (Mw) allant de 150,000 à 1,000,000 g/mol ou un premier polyéthylène de poids moléculaire ultra élevé ayant un poids moléculaire moyen en poids (Mw) de plus de 1,000,000 g/mol à 5,000,000 g/mol sous la forme d'un homopolymère ou d'un copolymère et transférer un mélange résultant au troisième réacteur ; et
(d) polymériser l'éthylène, et facultativement le comonomère d'∝-oléfine en C₄ à C₁₂ dans le deuxième réacteur en présence d'un système catalyseur, sélectionné parmi le catalyseur Ziegler-Natta ou le métallocène, et l'hydrogène, la quantité d'hydrogène dans le troisième réacteur se situant dans la plage de 0,1 à 70 % par mol, préférablement de 0,1 à 60 % par mol. par rapport à la totalité du gaz présent dans la phase de vapeur dans le troisième réacteur ou facultativement l'absence substantielle d'hydrogène de manière à obtenir un deuxième polyéthylène de poids moléculaire élevé ayant un poids moléculaire moyen (Mw) allant de plus de 150.000 à 1.000.000 g/mol ou un deuxième homopolymère ou copolymère de polyéthylène de poids moléculaire ultra élevé ayant un poids moléculaire moyen en poids (Mw) de plus de de 1.000,000 à 5,000,000 g/mol,
la composition de polyéthylène multimodal comprenant :
(A) 40 à 65 pourcent en poids, préférablement 43 à 52 pourcent en poids, plus préférablement 44 à 50 pourcent en poids, du polyéthylène de faible poids moléculaire ;
(B) 5 à 17 pourcent en poids, préférablement 10 à 17 pourcent en poids, plus préférablement 10 à 15 pour cent en poids du premier polyéthylène de poids moléculaire élevé ou du premier polyéthylène de poids moléculaire ultra élevé et
(C) 30 à 50 pourcent en poids, préférablement 37 à 47 pourcent en poids, plus préférablement 39 à 45 pourcent en poids, du deuxième polyéthylène de poids moléculaire élevé ou du deuxième polyéthylène de poids moléculaire ultra élevé, dans lequel la densité du premier polyéthylène de poids moléculaire élevé ou du premier polyéthylène de poids moléculaire ultra élevé de poids ultra élevé et du deuxième polyéthylène de poids moléculaire élevé ou du deuxième polyéthylène de poids ultra élevé se situe dans la même plage et les deux densités se situent dans la plage de 0,910 à 0,940 g/cm³, et la distribution du poids moléculaire de la composition de polyéthylène multimodal est de 18 à 30, préférablement de 20 à 28, mesurée par chromatographie par perméation de gel.

2. Composition de polyéthylène multimodal selon la revendication 1, dans laquelle l'équipement de dépressurisation permet d'ajuster la pression de service dans l'unité d'élimination de l'hydrogène à une pression se situant dans la plage de 103 à 145 (abs), préférablement de 104 à 130 kPa (abs), plus préférablement de 105 à 115 kPa (abs).

3. Composition de polyéthylène multimodal selon la revendication 1 ou 2, dans laquelle l'unité d'élimination de l'hydrogène contient en outre une colonne d'épuration pour la séparation de l'hydrogène et d'un diluant liquide,

4. Composition de polyéthylène multimodal selon l'une quelconque des revendications précédentes, dans laquelle l'élimination consiste à éliminer 98,0 à 99,8 % en poids de l'hydrogène, préférablement 98,0 à 99,5 % en poids et plus préférablement encore 98,0 à 99,1 % en poids.

5. Composition de polyéthylène multimodal selon l'une quelconque des revendications précédentes, dans laquelle la pression de travail dans l'unité d'élimination de l'hydrogène se situe dans la plage de 103 à 145 kPa (abs), plus préférablement de 104 à 130 kPa (abs), et le plus préférablement de 105 à 115 kPa (abs)

6. Composition de polyéthylène multimodal selon l'une quelconque des revendications précédentes dans laquelle la composition de polyéthylène multimodal a un poids moléculaire moyen en poids allant de 150.000 à 400.000 g/mol, préférablement de 200.000 à 300.000 g/mol, mesuré par chromatographie par perméation de gel.

7. Composition de polyéthylène multimodal selon l'une quelconque des revendications précédentes, dans laquelle la composition de polyéthylène multimodal a un poids moléculaire moyen en nombre de 5.000 à 15.000 g/mol, préférablement de 7.000 à 13.000 g/,mol, mesuré par chromatographie par perméation de gel.

8. Composition de polyéthylène multimodal selon l'une quelconque des revendications précédentes, dans laquelle la composition de polyéthylène multimodal a une moyenne Z du poids moléculaire moyen allant de 1.000.000 à 3.000,000 g/mol, préférablement de 1.000.00 à 2.5000.000 g/mol mesuré par chromatographie par perméation de gel.

9. Composition de polyéthylène selon l'un quelconque des revendications précédentes, dans lequel la composition de polyéthylène multimodal a une densité d'au moins 0,940 g/cm³ , préférablement de 0,940 à 0,948 g/cm³ selon la norme D 1505 de l'ASTM et/ou un indice de fusion Mi₂ allant de 0,03 À 0,15 g//10 min préférablement de 0,03 à 0,10 g/10 min.

10. Film comprenant la composition de polyéthylène multimodal selon l'une quelconque des revendications précédentes, dans lequel le film a une épaisseur de 40 à 120 µm, préférablement de 45 à 80 µm.

11. Utilisation du film selon la revendication 10 en tant que sac industriel ou une géomembrane.
